# EUROPÄISCHE PATENTSCHRIFT

(11) **EP 3 476 793 B1**
(45) Veröffentlichungstag und Bekanntmachung des Hinweises auf die Patenterteilung: **24.06.2020**
(21) Anmeldenummer: 18201766.5
(22) Anmeldetag: 22.10.2018
(51) Int. Cl.: B66F 9/075, B66F 9/24, G05D 1/02

(54) **BETRIEB EINES FLURFÖRDERZEUGS UND ENTSPRECHENDES FLURFÖRDERZEUG**
OPERATION OF AN INDUSTRIAL TRUCK, AND CORRESPONDING INDUSTRIAL TRUCK
FONCTIONNEMENT D'UN CHARIOT DE MANUTENTION ET CHARIOT DE MANUTENTION CORRESPONDANT

(30) Priorität: 24.10.2017 DE 102017124832
(43) Veröffentlichungstag der Anmeldung: 01.05.2019
(73) Patentinhaber: Jungheinrich Aktiengesellschaft, 22047 Hamburg (DE)
(72) Erfinder: PAUTZ, Alexander, 22846 Norderstedt (DE); DOHRMANN, Lars, 22339 Hamburg (DE); ROCKEL, Sebastian, 22763 Hamburg (DE)
(74) Vertreter: Seemann & Partner Patentanwälte mbB

(56) Entgegenhaltungen:
- DE-A1- 10 033 857
- DE-A1-102010 055 774
- DE-A1-102013 111 187
- US-A- 5 208 753
- US-A1- 2004 083 025
- US-A1- 2012 191 272
- US-A1- 2016 090 285

## Beschreibung

Die Erfindung betrifft ein Verfahren zum Betreiben eines Flurförderzeugs sowie ein Flurförderzeug.

Es ist bekannt, dass in der Logistik, insbesondere Intralogistik, Flurförderzeuge eingesetzt werden. Insbesondere sind als Flurförderzeuge Schubmaststapler bekannt, um Lasten in sehr großen Höhen anzuheben und an Regalen ein- und auszustapeln. Hierbei ist es möglich, dass bei Hochregallagern die Einstapelhöhen in die Regalfächer Höhen von 10 bis 13 Metern erreichen, wobei die Bedienperson auf dem Flurförderzeug in Bodennähe verbleibt. Die Bedienung derartiger Flurförderzeuge erfordert hierbei viel Erfahrung, um die Vorgänge des Einstapelns bzw. des Ausstapelns schnell, sicher und effektiv durchführen zu können.

Darüber hinaus ist im Stand der Technik bekannt, dass unter Verwendung von Handscannern Paletten bzw. die Kennzeichnung von Paletten gescannt werden. Hierbei ist es in Hochregallagern nicht möglich, die Paletten in großer Höhe zu scannen. Um die Kennzeichnung der Paletten zu scannen, muss die Ware aus dem Regalfach entnommen und heruntergeholt werden. Hierbei kann sich erst nach der Ausstapelung der Ware aus einem Fach herausstellen, dass die Ware aus einem falschen Regalfach ausgestapelt wurde.

Überdies ist in Regallagern bekannt, dass Barcodes in der Höhe des Flurförderzeugs am Regallager angebracht sind und gescannt werden. Hierbei sind insbesondere die Barcodes aller oberen Regalfächer dicht übereinander angeordnet. Dies kann dazu führen, dass ein Stapelführer hierbei einen falschen Barcode eines Regalfachs scannt und somit die Ware in einem falschen Regalfach eingelagert wird. Entsprechendes gilt auch für eine Lagerverwaltungssoftware, so dass die Ware an einem anderen Ort eingelagert wird als sie sollte.

Außerdem ist bekannt, dass das Bedienpersonal lesbare Klarschriften an Regalfächern, um beispielsweise Fachnummern inklusive Gang, Regal, Ebene und weitere relevante Daten anzuzeigen, mit einem Handscanner oberhalb des Kopfes sowie in größeren Höhen nicht erfassen können.

In DE 10 2010 055 774 A1 sind ein Flurförderzeug sowie ein Verfahren zum Betreiben eines Flurförderzeugs beschrieben. Hierbei weist das Flurförderzeug einen Sensor zur Erfassung einer räumlichen Umgebung auf, der an einem Lasttragmittel des Flurförderzeugs angeordnet ist. Der Sensor ist als ein Time-of-Flight-Kamerasystem mit einer Lichtquelle, einem Lichtsensor und einer Lichteintrittsöffnung ausgebildet, wobei mindestens die Lichteintrittsöffnung im Bereich einer Spitze einer von zwei Gabelzinken angeordnet ist. Das Flurförderzeug weist eine Anzeigeeinheit auf, die mit einer Auswerteeinheit verbunden ist und zur Anzeige einer oder mehrerer der folgenden Anweisungen an eine Bedienperson in Abhängigkeit von einer aktuellen Position des Lasttragmittels in Relation zu einer erfassten Lagerungsposition ausgebildet ist: Lasttragmittel anheben oder absenken, Lasttragmittel nach rechts oder links bewegen, Lasttragmittel um eine vertikale Achse nach links oder rechts drehen, Lasttragmittel gegenüber der Horizontalen nach oben oder unten neigen, Lasttragmittel in Längsrichtung nach vorn oder hinten bewegen. Die genannten Anzeigen können insbesondere durch graphische Symbole veranschaulicht werden, die ein Erfassen der jeweiligen Anweisung vereinfachen.

Ferner ist in US 2004/0083025 A1 ein Verfahren zum Betrieb eines Flurförderzeugs offenbart, bei dem eine Detektionsvorrichtung zur Detektion der Position des Ziels der Einlagerung eines Objekts ermöglicht ist. Hierbei werden Positionsinformationen angezeigt. Dabei sind Markierungen am Hochregal und auf Paletten vorgesehen.

Darüber hinaus offenbart DE 100 33 857 A1 ein Regalbediengerät, das längs eines Regalgangs verfahrbar ist und ein höhenverstellbares Lastaufnahmemittel zum Einlagern von Gegenständen in Regalfächer aufweist. Bei dem Regalbediengerät ist vorgesehen, dass es über eine Fernbedieneinheit von einer Bedienperson fernsteuerbar ist.

Außerdem beschreibt DE 10 2013 111 187 A1 eine Vorrichtung zur Feinpositionierung eines Regalbediengeräts an einem Fach eines Hochregallagers. Hierbei ist ein eine Kamera aufweisender optischer Sensor vorgesehen, mittels dessen eine Markierung an dem jeweiligen Fach ortsaufgelöst erfasst wird.

Ausgehend von diesem Stand der Technik besteht die Aufgabe der Erfindung darin, das Einstapeln von Waren in ein Regalfach oder das Ausstapeln von Waren aus einem Regalfach zu erleichtern, wobei es u.a. möglich sein soll, die Stapelvorgänge auf einfache Weise zu beschleunigen.

Gelöst wird diese Aufgabe durch ein Verfahren zum Betreiben eines Flurförderzeugs, wobei das Flurförderzeug ein Hubgerüst aufweist, wobei am Hubgerüst ein zwei Gabelzinken aufweisender Gabelträger höhenverstellbar geführt wird oder ist, wobei mittels einer an einer Gabelzinke oder am Gabelträger angeordneten Digitalkamera eine an einem Regalfach eines Regallagers, insbesondere Hochregallagers, vorgesehene individuelle Regalfachkennzeichnung als digitale Bilddaten erfasst wird, wobei die digitalen Bilddaten an eine Rechnereinheit des Flurförderzeugs von der Digitalkamera übermittelt werden, wobei die digitalen Bilddaten von der Rechnereinheit analysiert werden und nach der Analyse an ein Anzeigefeld des Flurförderzeugs, insbesondere Display, übertragen werden und auf dem Anzeigefeld des Flurförderzeugs zu der erfassten Regalfachkennzeichnung des Regalfachs korrespondierende Informationen, insbesondere Textinformationen und/oder Symbole, angezeigt werden.

Die Erfindung beruht auf dem Gedanken, dass individuelle Regalfachkennzeichnungen an den Regalfächern eines Regallagers, insbesondere Hochregallagers, angeordnet sind und die individuellen Regalfachkennzeichnungen mittels einer Digitalkamera als digitale Bilddaten erfasst werden. Hierbei ist die Digitalkamera, die auch als ein Barcodescanner ausgebildet ist, an einer Gabelzinke oder am Gabelträger angeordnet, wobei die digitalen Bilddaten an eine Rechnereinheit übermittelt werden. Mittels der Rechnereinheit, wie zum Beispiel mit einem "embedded PC", werden der Videostrom der Digitalkamera auf 1D- und 2D-Barcodes sowie Klarschrift-Beschriftungen untersucht und analysiert. Hierbei werden gefundene Barcodes der individuellen Regalfachkennzeichnungen der Regalfächer einem Bediener auf dem Anzeigefeld, insbesondere Display, angezeigt, wobei anschließend das Bedienpersonal diese auswählen kann, um sie anschließend zum Beispiel an eine, vorzugsweise zentrale, Lagerverwaltungssoftware bzw. an ein Lagerverwaltungsprogramm zu übertragen.

Ein Vorteil der Erfindung besteht darin, dass anstelle eines manuellen Scanvorgangs durch einen Stapelführer der Scanvorgang der individuellen Regalfachkennzeichnung der Regalfächer automatisiert wird, wobei der Scanvorgang beispielsweise bei einem ausgefahrenen Gabelträger im Hochregal in Höhen durchgeführt wird, die außerhalb der Reichweite des Bedienpersonals sind. Der Vorteil der Erfindung besteht weiterhin darin, dass von dem Bedienpersonal kein Handscanner mehr benötigt wird, um einen Scanvorgang vorzunehmen.

Durch die Erfindung ist es möglich, Barcodes sowie Klarschriften von individuellen Regalfachkennzeichnungen, die an den Regalfächern angebracht sind, schnell und zuverlässig zu erfassen, wobei das Scannen von Barcodes sowie Klarschriften der Regalfachkennzeichnungen im Gegensatz zu einem manuell betätigten Handscanner gemäß dem Stand der Technik weniger störanfällig ist. Hierdurch wird das Scannen von individuellen Regalfachkennzeichnungen der Regalfächer verbessert.

Bei der Verwendung von Barcodes für die individuellen Regalfachkennzeichnungen werden mittels der Rechnereinheit die Barcodes analysiert und mittels des Anzeigefelds die mit dem jeweiligen Barcode verknüpften Informationen, beispielsweise in Form von Schrift und/oder Symbolen, jeweils auf dem Anzeigefeld bzw. Display dargestellt.

Im Rahmen der Erfindung kann es in einer Ausgestaltung vorgesehen sein, dass die aufgenommenen digitalen Bilddaten oder die analysierten digitalen Bilddaten direkt an einen Rechner einer Lagerverwaltungssoftware übermittelt werden.

Weist die individuelle Regalfachkennzeichnung eines Regalfachs Klarschrift-Schriftzeichen auf, die von der Digitalkamera als digitale Bilddaten erfasst werden, ist es im Rahmen der Erfindung vorgesehen, dass die digitalen Bilddaten mittels der Rechnereinheit des Flurförderzeugs unter Verwendung eines OCR-Programms (optical character regocnition) analysiert und erkannt werden.

Des Weiteren zeichnet sich das Verfahren dadurch aus, dass die Digitalkamera als Barcodescanner, insbesondere 1D-Barcodescanner oder als 2D-Barcodescanner oder QR-Scanner, ausgebildet ist und/oder dass die Regalfachkennzeichnung einen Barcode aufweist.

Darüber hinaus zeichnet sich eine Ausführungsform des Verfahrens dadurch aus, dass nach der Anzeige der zur Regalfachkennzeichnung eines Regalfachs korrespondierenden Informationen mittels des Anzeigefelds und nach einer, insbesondere interaktiven, Eingabe durch eine Bedienperson, die digitalen Bilddaten und/oder die zur Regalfachkennzeichnung korrespondierenden Informationen an einen Rechner, insbesondere einen Rechner eines Waren-Wirtschafts-Systems, übermittelt werden.

In einer alternativen Ausgestaltung ist vorgesehen, dass mittels einer Erkennungseinrichtung, vorzugsweise mittels eines Sensors, erfasst wird, dass aus einem Regalfach mit einer Regalfachkennzeichnung Ware ausgestapelt oder in ein Regalfach mit einer Regalfachkennzeichnung Ware eingestapelt wird oder wurde, und nach der Erfassung und der Analyse der Regalfachkennzeichnung die digitalen Bilddaten und/oder die zur Regalfachkennzeichnung korrespondierenden Informationen, insbesondere automatisch, an einen Rechner, insbesondere einen Rechner eines Waren-Wirtschafts-Systems, übermittelt werden. Hierdurch ist es beispielsweise möglich, dass die Einlagerung oder Auslagerung einer Ware oder einer Palette durch das Flurförderzeug mittels eines Sensors, vorzugsweise automatisch, erfasst und anschließend die digitalen Bilddaten und/oder die zur Regalfachkennzeichnung korrespondierenden Informationen automatisch an einen Rechner eines Waren-Wirtschafts-Systems übertragen wird, so dass eine interaktive Eingabe einer Bedienperson entfällt. Dabei ist es ebenso möglich, dass die zur Regalfachkennzeichnung eines Regalfachs korrespondierenden Informationen mittels des Anzeigefelds und die Übertragung der zur Regalfachkennzeichnung eines Regalfachs korrespondierenden Informationen an den weiteren Rechner angezeigt werden.

Gemäß einem weiteren Aspekt wird vor oder nach dem Einlagern einer Ware in das Regalfach die Regalfachkennzeichnung als digitale Bilddaten erfasst.

Außerdem ist gemäß einem weiteren Aspekt des Verfahrens vorgesehen, dass vor oder nach dem Auslagern einer Ware aus dem Regalfach die Regalfachkennzeichnung als digitale Bilddaten erfasst wird.

Des Weiteren wird die Aufgabe gelöst durch ein Flurförderzeug mit einem Hubgerüst, wobei am Hubgerüst ein zwei Gabelzinken aufweisender Gabelträger höhenverstellbar geführt wird oder ist, wobei an einer Gabelzinke oder am Gabelträger eine Digitalkamera zur Erfassung einer an einem Regalfach eines Regallagers, insbesondere Hochregallagers, vorgesehenen individuellen Regalfachkennzeichnung des Regalfachs als digitale Bilddaten vorgesehen ist, wobei das Flurförderzeug eine Rechnereinheit, die mit der Digitalkamera verbunden ist, zur Analyse der digitalen Bilddaten aufweist und wobei das Flurförderzeug ein Anzeigefeld zum Anzeigen von zu der erfassten Regalfachkennzeichnung korrespondierenden Informationen, insbesondere Textinformation und/oder Symbole, aufweist, wobei das Flurförderzeug eingerichtet ist, das voranstehend beschriebene Verfahren auszuführen.

Der Vorteil der Erfindung besteht darin, dass digitale Bilddaten der jeweiligen individuellen Regalfachkennzeichnung eines Regalfachs zum Beispiel in einer Höhe von über 3 oder 5 Metern mittels der Digitalkamera bereitgestellt werden, wobei die digitalen Bilddaten entsprechend mittels der Rechnereinheit ausgewertet werden. Hierbei werden beispielsweise die Bilddaten auf Barcodes und/oder auf Klarschrift-Schriftzeichen analysiert. Anschließend werden die mit den automatisch erkannten Barcodes der individuellen Regalfachkennzeichnung verknüpften Informationen dem Bedienpersonal auf einem Anzeigefeld, insbesondere Display, angezeigt, wobei anschließend die angezeigten Informationen einer entsprechenden Bedieneingabe durch das Bedienpersonal an eine Lagerverwaltungssoftware auf einem anderen Rechner übertragen werden. Insgesamt sind jedem Regalfach individuelle Regalfachkennzeichnungen zugeordnet.

Im Rahmen der Erfindung kann dabei vorgesehen werden, dass die Digitalkamera in einer Ausgestaltung eine Erkennungseinheit zum Erkennen von Barcodes aufweist. Außerdem können auch die Rechnereinheit und das Anzeigefeld in einem Produkt bzw. in einer Baueinheit angeordnet sein.

Insbesondere ist die Rechnereinheit des Flurförderzeugs als Bildverarbeitungseinheit zum Verarbeiten und Erkennen von Barcodes und Klarschrift-Schriftzeichen ausgebildet, wobei die Bildverarbeitungseinheit mit dem Anzeigefeld für Benutzerinteraktionen und/oder für die Lagerverwaltung verbunden oder verknüpft ist.

Gemäß der Erfindung werden Stapelvorgänge in einem Regallager, insbesondere Hochregallager, durch eine erfindungsgemäße Automatisierung vereinfacht und beschleunigt, wobei bei der Interaktion mit einer Lagerverwaltungssoftware eine Automatisierung verbessert wird.

Weitere Merkmale der Erfindung werden aus der Beschreibung erfindungsgemäßer Ausführungsformen zusammen mit den Ansprüchen und der beigefügten Zeichnung ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnung beschrieben, wobei bezüglich aller im Text nicht näher erläuterten erfindungsgemäßen Einzelheiten ausdrücklich auf die Zeichnung verwiesen wird. Es zeigt:

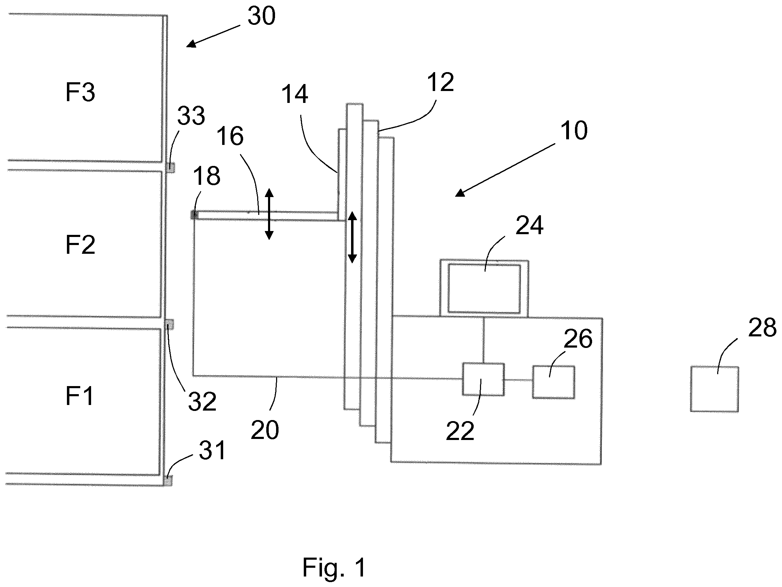

- Fig. 1: eine schematische Ansicht auf ein Regal und ein Flurförderzeug.

Fig. 1 zeigt in einer schematischen Darstellung eine Ansicht eines schematisch dargestellten Flurförderzeugs 10, wobei aus Gründen der Übersichtlichkeit von der Einzeichnung nicht erfindungswesentlicher Elemente abgesehen worden ist.

Das Flurförderzeug 10 weist ein Hubgerüst 12 auf, an dem ein Lastschlitten 14 höhenverstellbar geführt wird. Der Lastschlitten 14 weist darüber hinaus zwei Gabelzinken 16 auf, wobei aus Gründen der Darstellung nur ein Gabelzinken 16 dargestellt bzw. sichtbar ist. An der Stirnseite des Gabelzinkens ist eine Digitalkamera 18 angeordnet, mittels der individuelle Regalfachkennzeichnungen erfasst werden.

In der in Fig. 1 dargestellten Seitenansicht ist das Flurförderzeug 10 vor einem Regal 30 positioniert. Das Regal 30 ist insbesondere als Hochregallager ausgebildet und weist mehrere übereinander angeordnete Regalfächer F1, F2, F3 auf, in die entsprechende Waren zum Beispiel auf Paletten eingestapelt oder ausgestapelt werden. Der an sich bekannte Einstapelvorgang oder Ausstapelvorgang der Ware erfolgt unter Verwendung des Flurförderzeugs 10.

An der Frontseite des Regals 30 sind für das jeweilige Regalfach F1, F2, F3 im Bereich des Regalfachbodens individuelle Regalfachkennzeichnungen 31, 32, 33 angeordnet. Die Regalfachkennzeichnungen 31, 32, 33 sind beispielsweise als Barcode und/oder Klarschrift-Schriftzeichen ausgebildet, wodurch das dazugehörige Regalfach F1, F2, F3 spezifiziert bzw. gekennzeichnet ist.

Mittels der Digitalkamera 18 werden bei Positionierung gegenüber der jeweiligen Regalfachkennzeichnung 31, 32, 33 die entsprechenden Kennzeichnungen als digitale Bilddaten erfasst und über eine Verbindungsleitung 20 an eine Rechnereinheit 22 des Flurförderzeugs 10 übertragen. Hierbei ist die Digitalkamera 18 über die Verbindungsleitung 20 mit der Rechnereinheit 22 verbunden.

Mittels der Rechnereinheit 22 werden die digitalen Bilddaten analysiert bzw. entsprechend umgesetzt, so dass die zu jedem Regalfach F1, F2, F3 individuellen Regalfachkennzeichnungen 31, 32, 33 in aufbereiteter Form auf einem Display 24 des Flurförderzeugs 10 dargestellt werden. Auf dem Display 24 werden hierbei die individuellen Daten und Informationen zu der jeweils erfassten Regalfachkennzeichnung 31, 32, 33 für eine Bedienperson dargestellt.

Darüber hinaus sind auch (nicht dargestellte) Eingabemittel vorgesehen, wodurch bei einer entsprechenden Eingabe durch eine Bedienperson die spezifischen und kennzeichnenden Daten und Informationen zu einem Regalfach von der Rechnereinheit 22 an einen zweiten Rechner 26 übertragen werden. Der Rechner 26 ist hierbei beispielsweise Bestandteil eines logistischen Lagerverwaltungssystems, wodurch die in dem Regal 30 eingestapelten oder ausgestapelten Waren verwaltet werden. Der Rechner 26 kann darüber hinaus beispielsweise über eine Funkverbindung mit einem weiteren externen Rechner 28 des Lagerverwaltungssystems in Verbindung stehen.

Im Rahmen der Erfindung sind Merkmale, die mit "insbesondere" oder "vorzugsweise" gekennzeichnet sind, als fakultative Merkmale zu verstehen.

### Bezugszeichenliste

- 10: Flurförderzeug
- 12: Hubgerüst
- 14: Lastschlitten
- 16: Gabelzinke
- 18: Digitalkamera
- 20: Verbindungsleitung
- 22: Rechnereinheit
- 24: Display
- 26: Rechner
- 28: Rechner
- 30: Regal
- 31: Regalfachkennzeichnung
- 32: Regalfachkennzeichnung
- 33: Regalfachkennzeichnung

- F1: Regalfach
- F2: Regalfach
- F3: Regalfach

## Patentansprüche

1. Verfahren zum Betreiben eines Flurförderzeugs (10), wobei das Flurförderzeug (10) ein Hubgerüst (12) aufweist, wobei am Hubgerüst (12) ein zwei Gabelzinken (16) aufweisender Gabelträger höhenverstellbar geführt wird oder ist, wobei mittels einer an einer Gabelzinke (16) oder am Gabelträger angeordneten Digitalkamera (18) eine an einem Regalfach (F1, F2, F3) eines Regallagers (30), insbesondere Hochregallagers, vorgesehene individuelle Regalfachkennzeichnung (31, 32, 33) als digitale Bilddaten erfasst wird, wobei die digitalen Bilddaten an eine Rechnereinheit (22) des Flurförderzeugs (10) von der Digitalkamera (18) übermittelt werden, wobei die digitalen Bilddaten von der Rechnereinheit (22) analysiert werden und nach der Analyse an ein Anzeigefeld des Flurförderzeugs (10), insbesondere Display (24), übertragen werden und auf dem Anzeigefeld des Flurförderzeugs (10) zu der erfassten Regalfachkennzeichnung (31, 32, 33) des Regalfachs (F1, F2, F3) korrespondierende Informationen, insbesondere Textinformationen und/oder Symbole, angezeigt werden.

2. Verfahren nach Anspruch 1, **dadurch gekennzeichnet, dass** die Digitalkamera (18) als Barcodescanner, insbesondere 1D-Barcodescanner oder als 2D-Barcodescanner oder QR-Scanner, ausgebildet ist und/oder dass die Regalfachkennzeichnung (31, 32, 33) einen Barcode aufweist.

3. Verfahren nach Anspruch 1 oder 2, **dadurch gekennzeichnet, dass** mittels der Digitalkamera (18) Klarschrift-Schriftzeichen als Regalfachkennzeichnung (31, 32, 33) erfasst werden.

4. Verfahren nach einem der Ansprüche 1 bis 3, **dadurch gekennzeichnet, dass** nach der Anzeige der zur Regalfachkennzeichnung (31, 32, 33) eines Regalfachs (F1, F2, F3) korrespondierenden Informationen mittels des Anzeigefelds und nach einer, insbesondere interaktiven, Eingabe durch eine Bedienperson die digitalen Bilddaten und/oder die zur Regalfachkennzeichnung (31, 32, 33) korrespondierenden Informationen an einen Rechner (26, 28), insbesondere einen Rechner eines Waren-Wirtschafts-Systems, übermittelt werden.

5. Verfahren nach einem der Ansprüche 1 bis 3, **dadurch gekennzeichnet**, mittels einer Erkennungseinrichtung, vorzugsweise mittels eines Sensors, erfasst wird, dass aus einem Regalfach (F1, F2, F3) mit einer Regalfachkennzeichnung (31, 32, 33) Ware ausgestapelt oder in ein Regalfach (F1, F2, F3) mit einer Regalfachkennzeichnung (31, 32, 33) Ware eingestapelt wird oder wurde, und nach der Erfassung und der Analyse der Regalfachkennzeichnung (31, 32, 33) des Regalfachs (F1, F2, F3) die digitalen Bilddaten und/oder die zur Regalfachkennzeichnung (31, 32, 33) korrespondierenden Informationen, insbesondere automatisch, an einen Rechner (26, 28), insbesondere einen Rechner eines Waren-Wirtschafts-Systems, übermittelt werden.

6. Verfahren nach einem der Ansprüche 1 bis 5, **dadurch gekennzeichnet, dass** vor oder nach dem Einlagern einer Ware in das Regalfach (F1, F2, F3) die Regalfachkennzeichnung (31, 32, 33) als digitale Bilddaten erfasst wird.

7. Verfahren nach einem der Ansprüche 1 bis 6, **dadurch gekennzeichnet, dass** vor oder nach dem Auslagern einer Ware aus dem Regalfach (F1, F2, F3) die Regalfachkennzeichnung (31, 32, 33) als digitale Bilddaten erfasst wird.

8. Flurförderzeug (10) mit einem Hubgerüst (12), wobei am Hubgerüst (12) ein zwei Gabelzinken (16) aufweisender Gabelträger höhenverstellbar geführt wird oder ist, wobei an einer Gabelzinke oder am Gabelträger eine Digitalkamera (18) zur Erfassung einer an einem Regalfach (F1, F2, F3) eines Regallagers (30), insbesondere Hochregallagers, vorgesehenen, individuellen Regalfachkennzeichnung (31, 32, 33) des Regalfachs (F1, F2, F3) als digitale Bilddaten vorgesehen ist, wobei das Flurförderzeug (10) eine Rechnereinheit (22), die mit der Digitalkamera (18) verbunden ist, zur Analyse der digitalen Bilddaten aufweist und wobei das Flurförderzeug (10) ein Anzeigefeld zum Anzeigen von zu der erfassten Regalfachkennzeichnung (31, 32, 33) korrespondierenden Informationen, insbesondere Textinformation und/oder Symbole, aufweist, wobei das Flurförderzeug (10) eingerichtet ist, ein Verfahren nach einem der Ansprüche 1 bis 7 auszuführen.

## Claims

1. A method for operating an industrial truck (10), wherein the industrial truck (10) comprises a lifting mechanism (12), wherein a fork carrier comprising two fork prongs (16) is or will be height-adjustable guided on the lifting mechanism (12), wherein an individual rack bay label (31, 32, 33) provided on a rack bay (F1, F2, F3) of a storage rack (30), particularly a high-bay storage rack, is captured as digital image data by means of a digital camera (18) disposed on a fork prong (16) or on the fork carrier, wherein the digital images are transmitted from the digital camera (18) to a computer unit (22) of the industrial truck (10), wherein the digital image data is analyzed by the computer unit (22) and transmitted after the analysis to a display panel of the industrial truck (10), particularly a display unit (24), and information corresponding to the captured rack bay label (31, 32, 33) of the rack bay (F1, F2, F3), particularly text information and/or symbols, is displayed on the display panel of the industrial truck (10).

2. The method according to Claim 1, **characterized in that** the digital camera (18) is configured as a barcode scanner, particularly a 1D barcode scanner or a 2D barcode scanner or a QR scanner, and/or that the rack bay label (31, 32, 33) comprises a barcode.

3. The method according to Claim 1 or 2, **characterized in that** clear text characters are captured as the rack bay label (31, 32, 33) by means of the digital camera (18).

4. The method according to one of the claims 1 to 3, **characterized in that** after the information corresponding to a rack bay (F1, F2, F3) for labeling the rack bay (31, 32, 33) is displayed by means of the display panel, and after an, particularly interactive, entry by an operator, the digital image data and/or of the information corresponding to the rack bay label (31, 32, 33) is transmitted to a computer (26, 28), particularly a computer of a materials management system.

5. The method according to one of the claims 1 to 3, **characterized in that** it is detected by means of a detecting device, preferably by means of a sensor, that goods are or have been taken out of a rack bay (F1, F2, F3) having a rack bay label (31, 32, 33) or goods are or have been placed into a rack bay (F1, F2, F3) having a rack bay label (31, 32, 33), and after the rack bay label (31, 32, 33) of the rack bay (F1, F2, F3) has been captured and analyzed, the digital image data and/or the information corresponding to the rack bay label (31, 32, 33) is transmitted, particularly automatically, to a computer (26, 28), particularly a computer of a materials management system.

6. The method according to one of the claims 1 to 5, **characterized in that** the rack bay label (31, 32, 33) is captured as digital image data before or after goods are placed in the rack bay (F1, F2, F3).

7. The method according to one of the claims 1 to 6, **characterized in that** the rack bay label (31, 32, 33) is captured as digital image data before or after goods are removed from the rack bay (F1, F2, F3).

8. An industrial truck (10) having a lifting mechanism (12), wherein a fork carrier comprising two fork prongs (16) is or will be height-adjustable guided on the lifting mechanism (12), wherein a digital camera (18) is provided on a fork prong or on the fork carrier for capturing an individual rack bay label (31, 32, 33) of the rack bay (F1, F2, F3) mounted on the rack bay (F1, F2, F3) of a storage rack (30), particularly a high-bay storage rack, as digital image data, wherein the industrial truck (10) comprises a computer unit (22), which is connected to the digital camera (18), for analyzing the digital image data and wherein the industrial truck (10) comprises a display panel for displaying information, particularly text information and/or symbols, corresponding to the captured rack bay label (31, 32, 33), wherein the industrial truck (10) is configured to perform a method according to any one of the claims 1 to 7.

## Revendications

1. Procédé pour faire fonctionner un chariot de manutention (10), le chariot de manutention (10) présentant un châssis de levage (12), un support de fourche avec deux branches de fourche (16) étant guidé ou apte à être guidé de manière réglable en hauteur sur le châssis de levage (12), un étiquetage individuel (31, 32, 33) de compartiment d'étagères, prévu sur un compartiment d'étagères (F1, F2, F3) d'un support de stockage (30) à étagères, en particulier d'un support à étagères de grande hauteur, étant enregistré sous forme de données d'image numériques au moyen d'un appareil de prise de vues numérique (18) disposé sur une branche de fourche (16) ou sur le support de fourche, les données d'image numériques étant transmises à une unité de calcul (22) du chariot de manutention (10) par l'appareil de prise de vues numérique (18), les données d'image numériques étant analysées par l'unité de calcul (22) et, après l'analyse, étant transmises à un panneau d'affichage du chariot de manutention (10), qui est en particulier un écran (24), et des informations détectées, correspondant à l'étiquetage (31, 32, 33) de compartiment d'étagères du compartiment d'étagère (F1, F2, F3), qui sont en particulier des informations textuelles et/ou des symboles, étant affichées sur le panneau d'affichage du chariot de manutention (10).

2. Procédé selon la revendication 1, **caractérisé en ce que** l'appareil de prise de vues numérique (18) est sous la forme d'un lecteur de code à barres, en particulier d'un lecteur de code à barres 1D ou d'un lecteur de code à barres 2D ou d'un lecteur QR, et/ou **en ce que** l'étiquetage (31, 32, 33) de compartiment d'étagère comporte un code à barres.

3. Procédé selon la revendication 1 ou la revendication 2, **caractérisé en ce que** des caractères de texte en clair sont détectés en tant qu'étiquetage (31, 32, 33) de compartiment d'étagère au moyen de l'appareil de prise de vues numérique (18).

4. Procédé selon l'une des revendications 1 à 3, **caractérisé en ce qu'**après l'affichage des informations correspondant à l'étiquetage (31, 32, 33) d'un compartiment d'étagère (F1, F2, F3) au moyen du champ d'affichage et après une saisie, notamment interactive, par un opérateur, les données d'image numériques et/ou les informations correspondant à l'étiquetage (31, 32, 33) de compartiment d'étagère sont transmises à un ordinateur (26, 28), notamment un ordinateur d'un système de gestion des marchandises.

5. Procédé selon l'une des revendications 1 à 3, **caractérisé en ce qu'**au moyen d'un dispositif de reconnaissance, de préférence au moyen d'un capteur, il est détecté que des marchandises sont ou ont été empilées hors d'un compartiment d'étagère (F1, F2, F3) avec un étiquetage (31, 32, 33) de compartiment d'étagère ou que des marchandises sont ou ont été empilées dans un compartiment d'étagère (F1, F2, F3) avec un étiquetage (31, 32, 33) de compartiment d'étagère, et, après la détection et l'analyse de l'étiquetage (31, 32, 33) de compartiment d'étagère du compartiment de étagères (F1, F2, F3), les données d'image numérique et/ou les informations correspondant à l'étiquetage (31, 32, 33) de compartiment d'étagère sont transmises, notamment de manière automatique, à un ordinateur (26, 28), en particulier un ordinateur d'un système de gestion des marchandises.

6. Procédé selon l'une des revendications 1 à 5, **caractérisé en ce qu'**avant ou après qu'une marchandise soit placée dans le compartiment d'étagères (F1, F2, F3), l'étiquetage (31, 32, 33) de compartiment d'étagère est enregistré sous forme de données d'image numériques.

7. Procédé selon l'une des revendications 1 à 6, **caractérisé en ce qu'**avant ou après qu'une marchandise soit retirée hors du compartiment d'étagère (F1, F2, F3), l'étiquetage (31, 32, 33) de compartiment d'étagère est enregistré sous forme de données d'image numériques.

8. Chariot de manutention (10) avec un châssis de levage (12), dans lequel un support de fourche avec deux branches de fourche (16) est guidé ou apte à être guidé de manière réglable en hauteur sur le châssis de levage (12), un appareil de prise de vues numérique (18) est prévu sur une fourche ou sur le support de fourche, pour capturer un étiquetage individuel (31, 32, 33) de compartiment d'étagère d'un compartiment d'étagères (F1, F2, F3) d'un support de stockage (30) à étagères, en particulier d'un support à étagères de grande hauteur, sous forme de données d'images numériques, le chariot de manutention (10) présentant une unité informatique (22), qui est reliée à l'appareil de prise de vues numérique (18), pour analyser les données d'image numériques, et le chariot de manutention (10) présentant un champ d'affichage pour afficher des informations correspondant à l'étiquetage détecté (31, 32, 33) de compartiment d'étagère, en particulier des informations textuelles et/ou des symboles, le chariot de manutention (10) étant configuré pour mettre en œuvre un procédé selon l'une des revendications 1 à 7.
